Europäisches Patentamt

European Patent Office

Office européen des brevets

(19)

(11) Numéro de publication: **0 298 795**
**A1**

(12) **DEMANDE DE BREVET EUROPEEN**

(21) Numéro de dépôt: **88401459.8**

(22) Date de dépôt: **14.06.88**

(51) Int. Cl.⁴: **H 04 N 9/097**

(30) Priorité: **26.06.87 FR 8709018**

(43) Date de publication de la demande:
**11.01.89 Bulletin 89/02**

(84) Etats contractants désignés: **CH DE GB IT LI**

(71) Demandeur: **ETABLISSEMENTS PIERRE ANGENIEUX**
**Usine de Saint-Héand**
**F-42570 Saint-Héand (FR)**

(72) Inventeur: **Corbasson, Gérard**
**28, Avenue Louis Thiollier**
**F-42570 Saint-Heand (FR)**

(74) Mandataire: **Tony-Durand, Serge**
**Cabinet Tony-Durand 77, rue Boissière**
**F-75116 Paris (FR)**

(54) Dispositif séparateur trichrome pour le traitement d'une image polychromatique.

(57) Sur le trajet de l'un des trois groupes de rayons provenant de ce séparateur (2-3-4) et qui correspondent aux trois images de couleurs différentes, il est disposé, un coin en verre (5), mobile selon un axe (X-Y) orthogonal à l'axe des rayons du groupe considéré. Pour le déplacement de ce coin, il est prévu un mécanisme d'entrainement (6-7) asservi à un système de commande comportant un organe de détection de la focale et/ou de la distance de mise au point de l'objectif auquel le présent dispositif est associé, ainsi qu'un programmateur déterminant, en fonction de cette focale, l'importance du déplacement à impartir au coin en verre (5) pour corriger la position de l'image élémentaire correspondante, afin qu'elle se trouve formée sur le détecteur respectif d'analyse dans la position exacte voulue pour qu'il y ait superposition des trois images finales de couleur sur les écrans des récepteurs de télévision.

Ce dispositif est destiné équiper les caméras de télévision.

## Description

**Dispositif séparateur trichrome pour le traitement d'une image polychromatique"**

La présente invention concerne les dispositifs séparateurs trichromes qui sont associés à l'objectif des caméras de prises de vues utilisées pour la télévision en couleur. Ces dispositifs sont destinés à assurer la séparation d'une image polychromatique en trois images distinctes correspondant chacune à une des trois couleurs fondamentales : vert, bleu et rouge, de façon que chacune de ces images soit reçue par un capteur particulier.

Les dispositifs séparateurs actuellement utilisés à cet effet comportent en général trois ou quatre éléments prismatiques assemblés de façon fixe, et ajustés avec une grande précision dans leurs angles et dimensions. Ces dispositifs forment donc trois images distinctes dans trois plans, à partir de l'image polychromatique donnée par un objectif de prise de vue, le plus souvent un objectif à focale variable permettant de passer du grand angle au téléobjectif, en très peu de temps.

Cependant lorsque ces objectifs ont une gamme étendue de focales, il en résulte un accroissement de la variation de la position relative des trois images élémentaires produites par le dispositif séparateur. Cette variation est due aux aberrations chromatiques longitudinales, dont l'amplitude dépend de la focale ou de la distance de mise au point de l'objectif. Les images colorées formées sur les capteurs correspondants d'analyse occupent donc une position plus ou moins décalée par rapport à celle qu'elles devraient avoir pour qu'il y ait ensuite une parfaite superposition des images finales en couleur sur les écrans des récepteurs de télévision. Ceci se traduit, sur ces écrans de réception, par une tache de diffusion, ce qui a pour effet de diminuer le contraste et la résolution des images.

Jusqu'ici ces défauts affectaient surtout les images bleue et rouge, l'image verte servant de référence étant maintenue fixe par la loi de déplacement des éléments constitutifs de l'objectif à focale variable. Cependant ceci ne présentait pas un inconvénient rédhibitoire car la résolution assurée par les tubes d'analyse, dans les couleurs bleue et rouge, et principalement dans le bleu, était de toute façon inférieure à celle réalisée par le tube d'analyse de la couleur verte.

Cependant le remplacement des tubes actuels d'analyse par des détecteurs constitués d'une mosaïque de semi-conducteurs à transfert de charge (du type connu sous l'appellation "CCD") a pour conséquence que les défauts relevés ci-dessus sont maintenant beaucoup plus gênants. En effet, la qualité de résolution de ces détecteurs est la même en toute région du spectre, contrairement à ce qui est le cas pour les tubes d'analyse.

Par ailleurs sur les objectifs à focales variables employés en télévision, on utilise maintenant de plus en plus fréquemment des lentilles frontales atteignant, et même dépassant, 200mm de diamètre. Ceci a pour effet d'augmenter l'ouverture numérique aux longues focales. Mais ceci donne de ce fait plus d'importance aux taches de diffusion.

Bien entendu il est possible de mieux corriger le chromatisme longitudinal en multipliant le nombre des lentilles constituant le groupe frontal des objectifs à focale variable. Toutefois, pour éviter une augmentation genante de poids et surtout pour des motifs d'ordre économique, il est souhaitable de limiter ce nombre de lentilles de grande dimension.

C'est pourquoi la présente invention a pour but d'éviter les inconvénients exposés ci-dessus en réalisant un séparateur trichrome du type en cause qui est conçu pour pouvoir assurer la superposition des images finales en couleur de façon à conserver ainsi une netteté maximale sur les récepteurs.

A cet effet ce dispositif séparateur est caractérisé en ce que :
- sur le trajet de l'un au moins des trois groupes de rayons provenant de ce séparateur et qui correspondent aux trois images de couleurs différentes, il est disposé, un coin en verre, mobile selon un axe orthogonal à l'axe des rayons du groupe considéré et dont l'épaisseur est croissante le long de l'axe de déplacement de ce coin,
- et il est prévu, pour le déplacement de celuici, un mécanisme d'entraînement asservi à un système de commande comportant un organe de détection de la focale et/ou de la distance de mise au point de l'objectif auquel le présent dispositif est associé, ainsi qu'un programmateur déterminant, en fonction de cette focale ou de la distance de mise au point ou des deux, l'importance du déplacement à impartir au coin en verre pour corriger la position de l'image élémentaire correspondante afin qu'elle se trouve formée sur le détecteur respectif d'analyse dans la position exacte voulue, pour qu'il y ait superposition des trois images finales en couleur sur les écrans des récepteurs de télévision.

En général, les caractéristiques des objectifs utilisés sont telles que les images bleue et rouge sont superposées en étant décalées par rapport à l'image verte, et ce en raison des corrections du chromatisme primaire, l'amplitude de la variation étant elle-même corrigée par l'emploi de verres appropriés à une bonne correction du spectre secondaire. En conséquence, il est possible de calculer les objectifs pour que les images bleue et rouge soient stables, de sorte que seule l'image verte dévie de sa position.

Dans ces conditions il suffit que le coin mobile en verre soit disposé sur le trajet des rayons correspondant à l'image élémentaire de couleur verte pour que le présent dispositif puisse corriger la position de cette image en fonction de la focale variable de l'objectif.

Lorsque l'objectif utilisé ne correspond pas au cas envisagé ci-dessus, le dispositif séparateur selon l'invention comporte alors deux coins mobiles en verre, disposés respectivement sur le trajet de deux groupes distincts de rayons correspondant à deux images de couleurs différentes, et les dispositifs de commande des déplacements de ces deux coins sont aptes à impartir, chacun de ceux-ci, un déplacement déterminé tel que l'on obtienne la superposition des deux images finales correspondantes avec l'image finale de la troisième couleur. Ceci permet donc d'obtenir le même résultat que dans le cas précédent.

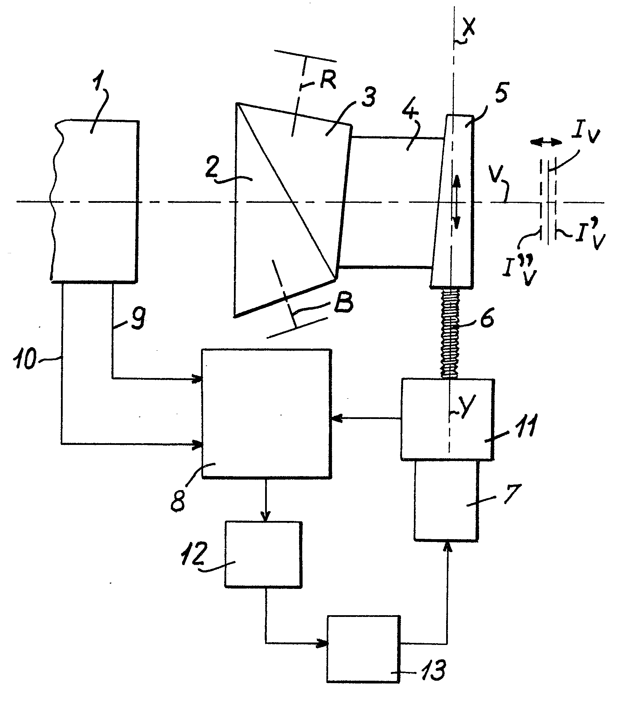

Cependant d'autres particularités et avantages du dispositif séparateur selon l'invention apparaîtront au cours de la description suivante d'un exemple de réalisation de celui-ci. Cette description est donnée en référence au dessin annexé à titre d'exemple et sur lequel :

La figure unique est une vue du diagramme de conception du présent dispositif.

Sur cette figure la référence 1 désigne l'objectif à focale variable auquel est associé le dispositif selon l'invention. Le séparateur trichrome proprement dit est constitué par trois éléments prismatiques 2, 3 et 4 qui sont assemblés de façon fixe. Ce séparateur assure, à partir de l'image polychromatique provenant de l'objectif 1, la formation de trois images distinctes correspondant chacune à une des trois couleurs fondamentales : rouge, vert, bleu. Les références R, V et B désignent les axes des trois groupes de rayons correspondant respectivement à la formation des images rouge, verte et bleue. Ces images sont formées sur les détecteurs utilisés pour leur transmission ultérieure, par exemple des mosaïques de semi-conducteurs à transfert de charge, du type connu sous l'appellation "CCD". Ceux-ci ne sont pas représentés sur le dessin annexé car ils ne font pas partie de l'invention.

L'exemple représenté sur le dessin correspond au cas où les caractéristiques de l'objectif 1 sont telles que les images bleue et rouge soient stables et que seule l'image verte $I_v$ dévie de sa position sous l'effet des aberrations chromatiques longitudinales dont l'amplitude dépend de l'importance de la focale variable de l'objectif.

Dans un tel cas, le dispositif selon l'invention comprend un coin mobile 5 en verre qui est interposé sur les trajets des rayons correspondant à l'image de couleur verte, le verre de ce coin étant de même indice que le bloc principal 2-3-4 du séparateur. Ce coin est mobile selon un axe X-Y orthogonal à l'axe V des rayons de l'image verte. Par ailleurs, l'épaisseur de ce coin est croissante le long de cet axe X-Y.

Ainsi en déplaçant ce coin, dans un sens ou dans l'autre, on obtient le déplacement de l'image de couleur verte d'une façon proportionnelle au changement d'épaisseur de la partie de ce coin qui se trouve alors placée sur le trajet des rayons correspondants. De cette façon l'image de couleur verte peut être ramenée dans la position exacte voulue $I_v$ sur le détecteur de réception de cette image alors que, du fait des aberrations chromatiques longitudinales, elle se trouverait autrement décalée, par exemple dans une position $I'_v$ ou $I''_v$.

Le dispositif de commande comprend un microcontroleur 8 qui est relié à l'objectif 1 par des circuits 9 et 10 partant de détecteurs permettant de déterminer respectivement le réglage de mise au point de l'objectif et la valeur de sa focale variable. Ce microcontrôleur est relié à un programmateur 11 comportant une mémoire morte qui donne, en fonction de la valeur de la focale de l'objectif, la valeur du déplacement à impartir au coin mobile 5 en verre pour déplacer l'image de couleur verte afin que celle-ci soit ramenée dans la position voulue $I_v$. Ce microcontrôleur 8 commande par ailleurs la mise en fonctionnement du moteur 7 d'entraînement par l'intermédiaire d'un module 12 de commande et d'un module 13 d'asservissement de la vitesse. Dans ces conditions, lors de chacune des variations de la focale de l'objectif 1, qui est susceptible d'entraîner un décalage de l'image de couleur verte par rapport à sa position voulue $I_v$, le présent dispositif impartit au coin mobile 5 en verre le déplacement nécessaire pour modifier la position de cette image afin de la ramener dans la position $I_v$. On obtient donc de la sorte une bonne superposition finale des trois images finales en couleur sur les écrans des récepteurs de télévision, puisque du fait même des caractéristiques utilisées il y a déjà superposition des images bleue et rouge.

Lorsque les caractéristiques de l'objectif utilisé n'assurent pas une telle superposition de deux des images en couleur, le dispositif selon l'invention comporte deux coins mobiles en verre, tels que le coin 5, ceux-ci étant interposés sur le trajet de deux groupes distincts des rayons correspondant à deux images de couleurs différentes, par exemple l'image verte et l'image bleue. Le déplacement de ces deux coins est alors commandé par deux dispositifs distincts de commande de même conception que précédemment, mais qui sont aptes à impartir, à chacun de ces coins, un déplacement déterminé tel que l'on obtienne la superposition des deux images finales correspondantes avec l'image finale de la troisième couleur qui sert alors de référence.

Ainsi, dans l'un et l'autre cas, le dispositif selon l'invention permet d'obtenir la superposition des trois images finales en couleur sur les écrans des récepteurs de télévision, donc une netteté maximale, et ce malgré les aberrations chromatiques longitudinales pouvant résulter des variations de la focale de l'objectif utilisé ou de sa distance de mise au point.

**Revendications**

1. Dispositif destiné à être associé à un objectif de caméra de télévision pour assurer la séparation d'une image polychromatique en trois images correspondant chacune à une des trois couleurs fondamentales - rouge, verte et bleue - au moyen de plusieurs éléments prismatiques assemblés de façon fixe, caractérisé en ce que :

- sur le trajet de l'un au moins des trois groupes de rayons provenant de ce séparateur (2-3-4) et qui correspondent aux trois images de couleurs différentes, il est disposé un coin en verre (5), mobile selon un axe (X-Y) orthogonal à l'axe des rayons du groupe considéré, et dont l'épaisseur est croissante le long de l'axe de déplacement de ce coin,

- et il est prévu, pour le déplacement de celuici, un mécanisme d'entrainement (6-7) asservi à un système de commande comportant un organe de détection de la focale et/ou de la distance de mise au point de l'objectif auquel le présent dispositif est associé, ainsi qu'un programmateur déterminant, en fonction de cette focale et/ou de cette distance de mise au point, l'importance du déplacement à impartir au coin en verre (5) pour corriger la position de l'image élémentaire correspondante, afin qu'elle se trouve formée sur le détecteur respectif d'analyse dans la position exacte voulue pour qu'il y ait superposition des trois images finales en couleur sur les écrans des récepteurs de télévision.

2.- Dispositif selon la revendication 1, caractérisé en ce qu'il comporte deux coins mobiles en verre disposés respectivement sur le trajet de deux groupes distincts de rayons correspondant à deux images de couleurs différentes et les dispositifs de commande des déplacements de ces deux coins sont aptes à impartir, à chacun de ceux-ci, un déplacement déterminé tel que l'on obtienne la superposition des deux images finales correspondantes avec l'image finale de la troisième couleur.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 164 752 (DOI et al.)<br>* Colonne 4, lignes 44-68 *<br>--- | 1-2 | H 04 N 9/097 |
| A | WO-A-8 500 083 (WATT et al.)<br>* Page 7, ligne 6 - page 8, ligne 10; figure 3 *<br>--- | 1-2 | |
| A | PATENT ABSTRACTS OF JAPAN, vol. 8, no. 99 (E-243)[1536], 10 mai 1984, page 16 E 243; & JP-A-59 15 377 (SANYO DENKI K.K.) 26-01-1984<br>--- | 1 | |
| A | PATENT ABSTRACTS OF JAPAN, vol. 9, no. 147 (E-323)[1870], 21 juin 1985, page 38 E 323; & JP-A-60 27 278 (FUJI SHASHIN KOKI K.K.) 12-02-1985<br>----- | 1 | |

**DOMAINES TECHNIQUES RECHERCHES (Int. Cl.4)**

H 04 N
G 02 B
G 03 B

Le présent rapport a été établi pour toutes les revendications

| Lieu de la recherche | Date d'achèvement de la recherche | Examinateur |
|---|---|---|
| LA HAYE | 04-10-1988 | PIGNIEZ T.J.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................
& : membre de la même famille, document correspondant

EPO FORM 1503 03.82 (P0402)